Europäisches Patentamt

European Patent Office

Office européen des brevets

(19)

(11) **EP 1 407 335 B1**

(12) ## FASCICULE DE BREVET EUROPEEN

(45) Date de publication et mention
de la délivrance du brevet:
**04.10.2006  Bulletin 2006/40**

(21) Numéro de dépôt: **02764926.8**

(22) Date de dépôt: **24.06.2002**

(51) Int Cl.:
***G05D 1/08*** **(2006.01)**

(86) Numéro de dépôt international:
**PCT/FR2002/002181**

(87) Numéro de publication internationale:
**WO 2003/001311 (03.01.2003 Gazette 2003/01)**

(54) **PROCEDE ET DISPOSITIF DE PILOTAGE DE L'ATTITUDE ET DE GUIDAGE D'UN SATELLITE PAR GRAPPE DE GYRODYNES**

VERFAHREN UND EINRICHTUNG ZUR REGELUNG VON SATELLITENLAGE UND STEUERUNG MIT EINEM GYRODYN-CLUSTER

METHOD AND DEVICE FOR CONTROLLING SATELLITE ATTITUDE AND STEERING USING A GYRODYNE CLUSTER

(84) Etats contractants désignés:
**AT BE CH CY DE DK ES FI FR GB GR IE IT LI LU MC NL PT SE TR**

(30) Priorité: **26.06.2001  FR 0108409**

(43) Date de publication de la demande:
**14.04.2004  Bulletin 2004/16**

(73) Titulaire: **EADS ASTRIUM SAS**
**31402 Toulouse Cedex 4 (FR)**

(72) Inventeurs:
 • **LAGADEC, Kristen**
 **F-31400 Toulouse (FR)**
 • **DEFENDINI, Ange**
 **F-31380 Montjoire (FR)**
 • **MORAND, Julien**
 **F-31130 Balma (FR)**

(74) Mandataire: **Bérogin, Francis**
**Cabinet Plasseraud**
**65/67 rue de la Victoire**
**75440 Paris Cedex 09 (FR)**

(56) Documents cités:
**FR-A- 2 786 283          US-A- 6 131 056**

 • **DEFENDINI A ET AL: "Low cost CMG-based AOCS designs" PROCEEDINGS 4TH ESA INTERNATIONAL CONFERENCE ON SPACECRAFT GUIDANCE, NAVIGATION AND CONTROL SYSTEMS AND TUTORIAL ON MODERN AND ROBUST CONTROL: THEORY, TOOLS AND APPLICATIONS (SP-425), PROCEEDINGS 4TH ESA INTERNATIONAL CONFERENCE ON SPACECRAFT GUIDANC, pages 393-398, XP008003434 2000, Noordwijk, Netherlands, ESA, Netherlands**

**Description**

La présente invention concerne les procédés et dispositifs permettant de piloter l'attitude d'un satellite par commande d'orientation de la direction de l'axe de rotation de la toupie des actionneurs gyroscopiques, ou gyrodynes, d'une grappe d'actionneurs gyroscopiques montée dans le satellite.

Les gyrodynes ou actionneurs gyroscopiques (désignés souvent par le sigle anglo-saxon cmg) ont une roue ou toupie montée sur un support, appelé cardan, orientable sur la plate forme du satellite par un moteur autour d'au moins un axe orthogonal à l'axe de rotation de la toupie. Un exemple de gyrodyne est donné dans la demande de brevet français n° 98 00556 à laquelle on pourra se reporter.

Une grappe de gyrodynes comporte au moins trois gyrodynes pour permettre d'amener un trièdre de référence lié au satellite dans toutes les attitudes et au moins deux gyrodynes pour un pilotage 2 axes. En général on utilise au moins quatre gyrodynes pour assurer une redondance.

La grappe de gyrodynes constitue un actionneur inertiel dont la commande permet d'appliquer un couple donnant à la plate-forme du satellite un profil de vitesses angulaires qui est spécifié par téléchargement à partir du sol ou par un calcul effectué à bord. Pour contrôler l'attitude, un système de commande détermine le couple à appliquer et en déduit une vitesse à appliquer aux cardans des gyrodynes. La capacité de fourniture du couple total C est en conséquence non stationnaire et non linéaire. Elle peut s'écrire, sous forme matricielle :

$$C = A(\sigma).\dot{\sigma} \qquad (1)$$

où A est la matrice jacobienne $a_{ij} = \partial H_i/\partial\sigma_j$, avec i=1 à 3 et j=1 à 4 (ou plus généralement prend toutes les valeurs depuis 1 jusqu'au nombre de gyrodynes). Une méthode classique de guidage consiste, connaissant le couple C à fournir, à inverser la relation (1) pour obtenir les vitesses $\dot{\sigma_c}$ le de consigne à donner aux gyrodynes. Le principe d'un tel contrôle est par exemple donné dans le document FR déjà mentionné ou le brevet US-A-6 131 056.

La demande de brevet français n° 98 14548, à laquelle on pourra se reporter, décrit et revendique un procédé de pilotage de l'attitude d'un satellite permettant de s'affranchir du problème des singularités, c'est-à-dire de la venue dans des configurations dans lesquelles il est impossible d'obtenir un couple selon une direction déterminée, en provoquant une commande de passage direct d'une configuration initiale à une configuration finale.

L'architecture décrite dans la demande de brevet n° 98 14548 comporte pour cela une grappe d'au moins quatre gyrodynes ayant des toupies respectives montées sur des cardans rotatifs montés sur une plate-forme du satellite, autour d'axes d'orientation de cardan tous différents.

Cette configuration présente l'avantage de principe d'avoir une isotropie maximale lorsque les quatre axes de cardan sont dirigés suivant les diagonales d'un cube. Lorsque l'on veut accroître la capacité suivant deux axes orthogonaux pour tenir compte de ce que les besoins d'agilité sont rarement isotropes, il suffit d'aplatir la pyramide dont les arêtes sont orthogonales aux axes des cardans. Mais, en contrepartie de ces avantages, l'architecture pyramidale présente divers inconvénients. L'enveloppe de capacité présente des concavités ; il n'est pas possible, dans le cas d'une pyramide aplatie, de régler indépendamment les capacités suivant les deux axes de la base de la pyramide. La perte d'un actionneur, amenant à une enveloppe d'agilité très dissymétrique, affecte notablement l'agilité.

Pour cette raison, il est proposé d'utiliser un satellite ayant une grappe d'au moins quatre actionneurs gyroscopiques ayant des toupies respectives montées sur des cardans orientables autour d'axes parallèles à l'une ou l'autre de seulement deux directions différentes et fixes par rapport au satellite, formant ainsi deux groupes d'actionneurs dont l'un d'au moins deux actionneurs, et d'adopter un procédé de pilotage original permettant d'éviter la venue dans des configurations singulières lors du pilotage d'attitude.

L'invention propose dans ce but un procédé de pilotage de l'attitude d'un tel satellite, suivant lequel:

on mesure l'attitude du satellite à l'aide de capteurs embarqués sur le satellite,

- on calcule le besoin de couple de commande pour effectuer une manoeuvre de réorientation de l'attitude déterminée,
- on effectue un calcul de linéarisation locale basé sur la pseudo-inversion de la matrice jacobienne de la fonction liant les orientations des cardans des actionneurs au moment cinétique total de la grappe pour déterminer une nouvelle orientation des cardans, et
- on commande des vitesses de précession de l'un au moins des cardans des actionneurs fournissant le couple de commande pour arriver à la configuration recherchée,

caractérisé en ce que l'on effectue le calcul en appliquant une contrainte de recherche de configuration de grappe éloignée des configurations singulières par répartition, entre les deux groupes d'actionneurs, de la composante du moment cinétique total de la grappe qui est perpendiculaire à la fois à l'une et à l'autre des deux dites directions.

Dans un mode avantageux de réalisation, on adopte, comme critère d'éloignement d'une configuration d'angles des cardans dans la grappe par rapport à une configuration singulière, le produit de deux critères plus simples s'appliquant séparément à chacun des deux groupes d'actionneurs.

Ces deux critères peuvent être de natures très variées:

Dans le cas où un des groupes est constitué de deux actionneurs portant chacun un moment cinétique adimensionnel de norme unité, le critère d'éloignement entre une configuration d'angles des cardans et une configuration singulière peut être un critère choisi comme:

- s'annulant quand l'angle entre les deux vecteurs moment cinétique portés par les deux actionneurs est nul ou plat, et
- atteignant un maximum quand l'angle entre les deux vecteurs moment cinétique portés par les deux actionneurs est proche de 90°.

La recherche d'une configuration finale éloignée des singularités peut permettre d'établir une tabulation des correspondances entre les différents moments cinétiques de grappe nécessaires aux différentes manoeuvres du satellite et les configurations de grappe optimales respectives associées. Dans une variante, la recherche d'une configuration finale éloignée des singularités fournit directement et de façon analytique une configuration de grappe optimale réalisant la demande de moment cinétique de grappe nécessaire à la manoeuvre du satellite.

Dans le cas d'un groupe constitué de trois actionneurs, portant chacun un moment cinétique adimensionnel de norme unité, le critère de distance entre une configuration d'angles cardan et une configuration singulière peut être défini de façon à s'annuler quand l'un des angles formés chaque fois par deux des trois vecteurs moment cinétique portés par les trois actionneurs est nul et de façon à atteindre son maximum quand ces angles sont proches de 120°.

Dans le cas où on effectue un pilotage suivant une loi prédéterminée dans le temps, on peut rechercher une configuration finale éloignée des singularités de façon continue, en déviant en permanence la configuration de la grappe pour se placer à tout moment - ou du moins périodiquement - sur le maximum local du critère d'éloignement de la singularité.

Dans une variante, on effectue la recherche d'une configuration finale éloignée des singularités dès qu'on détecte que l'éloignement entre la configuration courante et la singularité associée devient inférieure à un seuil prédéterminé.

La recherche d'une configuration finale éloignée des singularités peut être mise en oeuvre à l'avance, à partir de la connaissance préalable de la trajectoire de moment cinétique de grappe nécessaire au changement d'orientation du satellite et la trajectoire obtenue est ensuite utilisée comme trajectoire préférée, envoyée en boucle ouverte dans le cadre d'une méthode de contrôle de l'attitude associant une commande en boucle ouverte à la commande en boucle fermée de la demande FR déjà citée.

L'invention permet également d'effectuer un guidage suivant une loi mémorisée. Dans ce cas, il est avantageux de déterminer, avant la manoeuvre de ré-orientation, une configuration finale éloignée des singularités, connaissant la manoeuvre d'attitude à réaliser par le satellite, puis de contrôler l'attitude en associant une commande en boucle ouverte à une commande en boucle fermée, telle que décrite dans la demande FR 98 14548. En d'autres termes, on met en oeuvre le procédé à l'avance à partir de la connaissance préalable de la manoeuvre à réaliser et on effectue la manoeuvre d'attitude du satellite en utilisant la trajectoire obtenue en boucle ouverte dans un contrôle d'attitude associant une commande en boucle ouverte à une commande en boucle fermée assurant la venue du satellite dans l'attitude finale désirée.

L'invention propose également un dispositif de pilotage d'attitude permettant de mettre en oeuvre le procédé ci-dessus, comprenant :

une grappe d'au moins quatre actionneurs gyroscopiques ayant des toupies respectives montées sur des cardans orientables autour d'axes parallèles à l'une ou l'autre de seulement deux directions différentes et fixes par rapport au satellite, formant ainsi deux groupes d'actionneurs dont l'un d'au moins deux actionneurs

- des capteurs de mesure de l'attitude courante du satellite,
- des moyens de calcul pour calculer le besoin de couple de commande pour remplir une consigne d'attitude du satellite, et pour déterminer des moyens de commande des vitesses de précession des cardans réalisant le couple de commande au travers d'une méthode de linéarisation locale basée sur la pseudo-inversion de la matrice jacobienne de la fonction liant les orientations des cardans des actionneurs au moment cinétique de la grappe.

Les caractéristiques ci-dessus ainsi que d'autres apparaîtront mieux à la lecture de la description qui suit d'un mode particulier de réalisation de l'invention, donné à titre non limitatif. La description se réfère aux dessins qui l'accompagnent, dans lesquels :

- la figure 1 est un schéma en perspective montrant une disposition possible de quatre actionneurs gyroscopiques 1-axe d'une grappe utilisant une architecture avantageuse, les actionneurs étant représentés avec des orientations de cardan identiques ;
- la figure 2 est un schéma montrant les paramètres qui interviennent dans le calcul analytique des correspondances possibles entre le moment cinétique recherché H et les positions angulaires σ des cardans;
- la figure 3 est un schéma montrant les paramètres qui interviennent dans le calcul analytique en cas de perte de redondance du fait de la panne d'un actionneur.

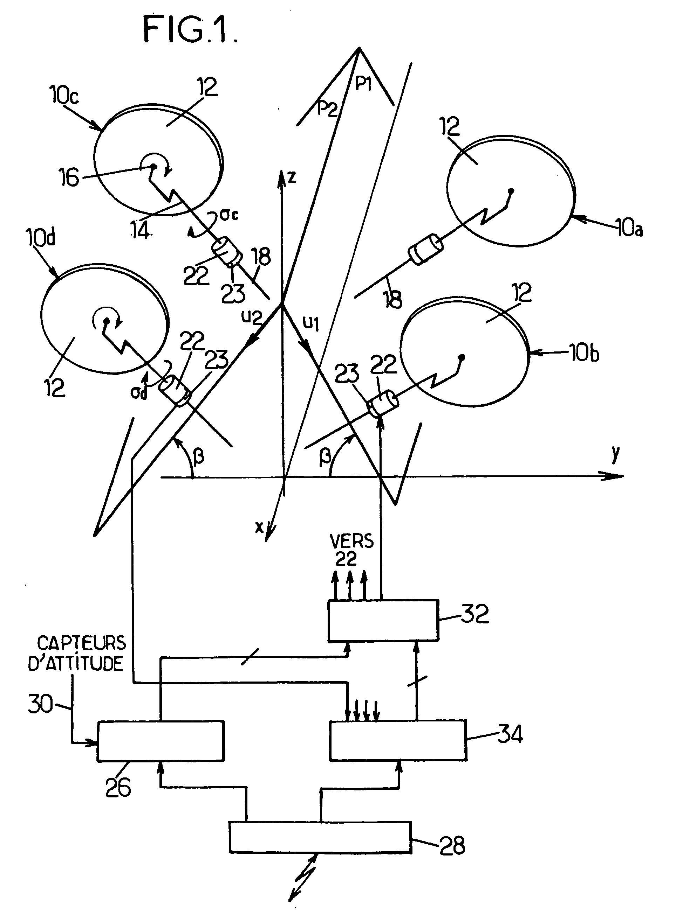

La figure 1 montre une grappe de quatre actionneurs gyroscopiques 10a, 10b, 10c, 10d identiques, ayant chacun une toupie 12 montée sur un cardan 14 de façon à pouvoir tourner autour d'un axe respectif 16. Un moteur non représenté maintient la toupie en rotation, généralement à vitesse constante. Chaque cardan est monté sur la plate-forme du satellite (non représentée) de façon à pouvoir tourner autour d'un axe 18. orthogonal à l'axe 16. Chacun des cardans est muni d'un moteur 22 permettant de faire tourner le cadran autour de l'axe 18 respectif. Un capteur angulaire tel que 23 donne une information sur l'orientation du cardan et donc du plan de la toupie 12.

Le maintien du satellite dans une attitude de consigne dans un repère inertiel est assuré par un système de commande d'attitude ayant une constitution générale qui peut être d'un type connu. Le système comporte un organe 26 de calcul et de commande qui mémorise des consignes d'orientation reçue par 'un émetteur-récepteur 28 de liaison avec le sol et reçoit des signaux 30 provenant de capteurs d'orientation, tels que capteurs d'étoile et d'horizon terrestre. Cet organe 26 commande des circuits de puissance 32 alimentant les moteurs 22. Ce système a généralement une constante de temps relativement longue, de quelques secondes à plusieurs dizaines de secondes.

Pour permettre la mise en oeuvre de l'invention, les axes 18 ont l'une ou l'autre de seulement deux orientations différentes.

Dans le trièdre de référence x,y,z lié au satellite, les axes des cardans des actionneurs 10a et 10b sont disposés perpendiculairement à un même plan P1. Les axes des cardans des actionneurs 10c et 10d sont également parallèles entre eux et disposés perpendiculairement à un plan P2 qui intercepte le plan P1 suivant l'axe x. Les plans P1 et P2 font l'un et l'autre un angle β avec l'axe y. On désignera par la suite le moment cinétique global de la grappe d'actionneurs par H et les composantes de H dans les plans P1 et P2 respectivement par H1 et H2 u1 et u2 désignent les axes perpendiculaires à x contenus respectivement dans les plans P1 et P2.

La configuration d'actionneurs montrée en figure 1 (ainsi que toute autre configuration d'actionneurs dans laquelle les axes des cardans sont deux à deux parallèles), a l'avantage de permettre d'exprimer de façon analytique la correspondance entre le moment cinétique H et les positions angulaires 1, 2, 3 et 4 des cardans, par exemple exprimée par rapport à la disposition montrée en figure 1.

Comme on l'a indiqué plus haut, le procédé suivant l'invention implique de rechercher une configuration de grappe, c'est-à-dire un ensemble de valeurs σ qui à la fois fournit le vecteur moment cinétique de grappe demandé H = [Hx,Hy,Hz] et qui est optimale, en ce sens qu'elle est éloignée d'une configuration singulière.

Pour effectuer l'analyse analytique, on décompose le vecteur H en :

- une composante [Hy,Hz] qui est dans le plan y,z, qui est elle-même décomposable en deux composantes Hu1 et Hu2 suivant les axes u1 et u2, d'une seule façon,
- une composante Hx selon l'axe x.

L'architecture adoptée permet de partager la composante Hx entre les deux paires d'actionneurs 10a-10b et 10c-10d avec un degré de liberté, sauf sur la surface enveloppe de moment cinétique, là où elle présente une singularité.

La décomposition du vecteur H en deux vecteurs H1 et H2 peut alors être la suivante :

dans le plan P1, défini par [x,u1], H1=Hu1+Hx1,
dans le plan P2, défini par [x,u2], H2=Hu2+Hx2.

Dans chaque plan, il suffit d'orienter les cardans dont les axes sont perpendiculaires à ce plan pour obtenir la composante plane nécessaire.

Par exemple, les deux cardans du plan P1 sont disposés symétriquement de part et d'autre de la direction du moment cinétique H1, en faisant un angle 1 avec cette direction, tel que :

$$2h \cos 1 = |H1|$$

h désignant le moment cinétique scalaire individuel de chaque toupie.

Dans le plan P2, la même opération peut être faite :

$$2h \cos 2 = |H2|$$

On voit que la détermination est purement analytique et permet d'obtenir quatre angles d'orientation des cardans qui fournissent le moment cinétique requis H, dans la limite de la valeur maximale R = 2h du moment cinétique de chaque paire d'actionneurs.

Etant donné qu'on dispose de quatre moments cinétiques réglables, alors que le moment cinétique H à réaliser est à trois dimensions, il y a un degré de liberté permettant d'obtenir Hx par toute combinaison de la forme :

$$Hx1 = \lambda Hx$$

$$Hx2 = [(1-\lambda)(Hx)]$$

$\lambda$ étant un coefficient de pondération choisi à volonté.

Conformément à l'invention, le choix est fait en recherchant la configuration de grappe éloignée des configurations singulières, en adoptant comme critère l'un de ceux indiqués plus haut.

En conséquence, l'architecture proposée, en combinaison avec le procédé suivant l'invention, permet d'obtenir de nombreux avantages.

La correspondance entre la valeur H requise et les différentes répartitions de 1, 2, 3 et 4 peut s'exprimer de façon purement analytique.

Il est possible de passer de n'importe quelle configuration créant un moment cinétique H déterminé à toute autre configuration créant le même moment cinétique par un déplacement à couple nul en permanence, cela simplement par une variation continue du facteur de pondération $\lambda$. Ceci confirme l'absence de singularités internes elliptiques pour la configuration proposée.

L'invention est applicable à divers modes de pilotage d'attitude et de guidage selon une loi prédéterminée à remplir sur une période longue, par exemple de plusieurs jours.

Les configurations et modes de contrôle habituellement utilisés par le passé exigeaient un guidage global obligeant le moment cinétique à suivre une variation déterminée à l'avance, pour éviter le passage par des singularités. Le pilotage local (que, pour la clarté, on opposera à guidage global) risquait en effet d'amener à des singularités elliptiques d'où il était difficile de sortir. Un guidage global, tel que proposé dans la demande de brevet français mentionné plus haut, écarte le problème, mais nécessite une connaissance préalable de la manoeuvre à accomplir.

Dans le cas de l'invention, il suffit, pour éviter de se retrouver dans une singularité, d'ajouter au pilotage local par pseudo-inversion de la jacobienne, une boucle d'asservissement permettant, à couple nul, de rechercher la configuration la plus éloignée possible d'une configuration singulière. Cette approche a l'avantage supplémentaire de garantir que la grappe d'actionneurs est toujours au voisinage d'un optimum de contrôlabilité.

L'invention se prête également au guidage prédictif fondé sur un algorithme de pilotage local, en suivant une trajectoire calculée à l'avance, mémorisée et injectée en boucle ouverte dans les moyens de calcul 34. En particulier, il est possible de pré-calculer une trajectoire optimale en terme de contrôlabilité, permettant à tout instant un profil de vitesse angulaire spécifié ou, du moins, de passer par des profils de vitesse spécifiés.

Un intérêt supplémentaire de la configuration est que la géométrie reste simple en cas de panne d'un des actionneurs, ce qui permet de conserver une capacité de contrôle d'attitude et de ne dégrader que faiblement l'agilité (de 25 % autour de l'axe x).

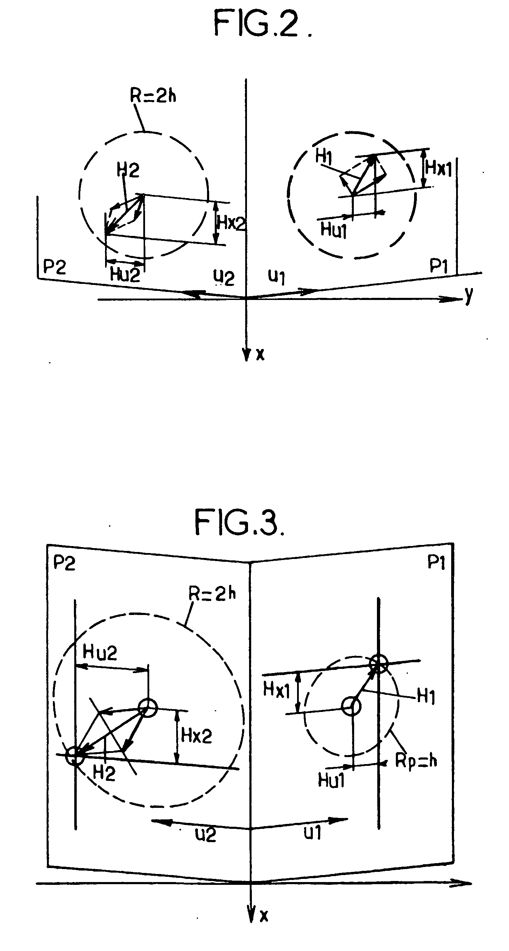

Si par exemple un des actionneurs du plan P1 est en panne, on se trouve dans le cas représenté sur la figure 3.

La résolution de la relation entre le moment cinétique global requis et les orientations des actionneurs disponibles reste strictement analytique.

La seule conséquence importante est que l'actionneur sain dans le plan P1 a une orientation angulaire qui est imposée par la demande de moment Hu1, la décomposition de H selon les axes u1 et u2 étant unique. Il n'y a naturellement plus le degré de liberté que fournissait la présence de quatre actionneurs.

La capacité de contrôle autour d'un moment cinétique nul est conservée par la présence de deux positions des actionneurs restant assurant la valeur zéro. Ces deux configurations sont non singulières et le rayon Rp du voisinage exempt de singularité est égal à h (figure 3).

La perte d'agilité sur l'axe x, dont la capacité est maximum, revient à passer de 4h à 3h. Suivant l'un des axes u, la perte d'agilité maximale est de 50 %. Mais, bien souvent, l'axe suivant lequel les exigences d'agilité sont les plus fortes est l'axe x, où la dégradation est la plus faible.

Dans le cas évoqué plus haut où un des groupes est constitué de deux actionneurs, le critère d'éloignement d'une configuration d'angles cardan par rapport à une configuration singulière peut être déterminé en utilisant un des paramètres suivants: - norme du produit vectoriel des deux vecteurs moment cinétique portés par les deux actionneurs; - valeur absolue du sinus de l'angle que forment les deux vecteurs moment cinétique portés par les deux actionneurs, - aire d'un triangle dont deux côtés sont les vecteurs moment cinétique portés par les deux actionneurs, leurs origines étant en coïncidence; et -différence entre l'unité et la valeur absolue du produit scalaire des deux vecteurs moment cinétique portés par les deux actionneurs.

Dans le cas où le groupe est constitué de trois actionneurs portant chacun un moment cinétique adimensionnel de norme unité, l'éloignement entre une configuration d'angles cardan et une configuration singulière peut être notamment déterminé en utilisant un des paramètres suivants : somme des trois produits vectoriels deux à deux des vecteurs moment cinétique portés par les trois actionneurs et aire du triangle dont les sommets coïncident avec les sommets des vecteurs moment cinétique portés par les trois actionneurs, leurs origines étant en coïncidence.

## Revendications

**1.**   Procédé de pilotage de l'attitude d'un satellite comportant une grappe d'au moins quatre actionneurs gyroscopiques (10a, 10b, 10c, 10d) ayant des toupies (12) respectives montées sur des cardans (14) orientables autour d'axes (18) parallèles à l'une ou l'autre de seulement deux directions différentes et fixes par rapport au satellite, formant ainsi deux groupes d'actionneurs dont l'un d'au moins deux actionneurs, suivant lequel:

   - on mesure l'attitude du satellite à l'aide de capteurs embarqués sur le satellite,
   - on calcule le besoin de couple de commande pour effectuer une manoeuvre de réorientation de l'attitude,
   - on effectue un calcul de linéarisation locale basé sur la pseudo-inversion de la matrice jacobienne de la fonction liant les orientations des cardans (14) des actionneurs au moment cinétique total de la grappe pour déterminer une nouvelle orientation des cardans, et
   - on commande des vitesses de précession de l'un au moins des cardans (14) des actionneurs fournissant le couple de commande pour arriver à la configuration recherchée,

   **caractérisé en ce que** l'on effectue le calcul en appliquant une contrainte de recherche de configuration de grappe éloignée des configurations singulières par répartition, entre les deux groupes d'actionneurs, de la composante du moment cinétique total de la grappe qui est perpendiculaire à la fois à l'une et à l'autre des deux dites directions.

**2.**   Procédé selon la revendication 1, **caractérisé en ce qu'**on adopte, comme critère d'éloignement d'une configuration d'angles des cardans (14) dans la grappe par rapport à une configuration singulière, le produit de deux critères plus simples s'appliquant séparément à chacun des deux groupes d'actionneurs(10a-10b , 10c-10d).

**3.**   Procédé selon la revendication 2, **caractérisé en ce que**, sur un groupe constitué de deux actionneurs portant chacun un moment cinétique adimensionnel de norme unité, le critère d'éloignement entre une configuration d'angles des cardans et une configuration singulière est choisi comme :

   - s'annulant quand l'angle entre les deux vecteurs moment cinétique portés par les deux actionneurs est nul ou plat, et
   - atteignant un maximum quand l'angle entre les deux vecteurs moment cinétique portés par les deux actionneurs est proche de 90°.

**4.**   Procédé selon la revendication 3, **caractérisé en ce que** le critère d'éloignement d'une configuration d'angles cardan par rapport à une configuration singulière est déterminé en utilisant un des paramètres suivants :

   - norme du produit vectoriel des deux vecteurs moment cinétique portés par les deux actionneurs,
   - valeur absolue du sinus de l'angle que forment les deux vecteurs moment cinétique portés par les deux actionneurs,

- aire d'un triangle dont deux côtés sont les vecteurs moment cinétique portés par les deux actionneurs, leurs origines étant en coïncidence,
- différence entre l'unité et la valeur absolue du produit scalaire des deux vecteurs moment cinétique portés par les deux actionneurs.

**5.** Procédé selon la revendication 2, **caractérisé en ce que**, le groupe considéré étant constitué de trois actionneurs portant chacun un moment cinétique adimensionnel de norme unité, le critère de distance entre une configuration d'angles cardan et une configuration singulière est défini de façon à s'annuler quand l'un des angles formés chaque fois par deux des trois vecteurs moment cinétique portés par les trois actionneurs est nul et de façon à atteindre son maximum quand ces angles sont proches de 120°.

**6.** Procédé selon la revendication 5, **caractérisé en ce que** l'éloignement entre une configuration d'angles cardan et une configuration singulière est déterminé en utilisant un des paramètres suivants :

- somme des trois produits vectoriels deux à deux des vecteurs moment cinétique portés par les trois actionneurs
- aire du triangle dont les sommets coïncident avec les sommets des vecteurs moment cinétique portés par les trois actionneurs, leurs origines étant en coïncidence.

**7.** Procédé selon l'une quelconque des revendications précédentes, en vue du pilotage du satellite suivant une loi déterminée dans le temps, **caractérisé en ce qu'**on recherche une configuration finale éloignée des singularités de façon continue, en déviant en permanence la configuration de la grappe pour se placer sur le maximum local du critère de distance à la singularité.

**8.** Procédé selon l'une quelconque des revendications 1 à 6, **caractérisé en ce qu'**on met en oeuvre la recherche d'une configuration finale éloignée des singularités quand on détecte que l'éloignement entre la configuration courante et la singularité associée devient inférieure à un seuil prédéterminé.

**9.** Procédé selon l'une quelconque des revendications 1 à 6, **caractérisé en ce que**, pour réaliser une manoeuvre d'attitude déterminée en arrivant à une configuration finale éloignée des singularités, on contrôle l'attitude en associant une commande en boucle ouverte à une commande en boucle fermée.

**10.** Procédé selon la revendication 9, **caractérisé en ce qu'**on établit par calcul préalable une tabulation des correspondances entre les différents moments cinétiques de grappe nécessaires aux différentes manoeuvres du satellite et les configurations de grappe optimales respectives associées afin d'arriver à une configuration finale éloignée des singularités .

**11.** Procédé selon la revendication 9, **caractérisé en ce que** la recherche d'une configuration finale éloignée des singularités fournit directement et de façon analytique une configuration de grappe optimale réalisant la demande de moment cinétique de grappe nécessaire à la manoeuvre du satellite.

**12.** Procédé selon la revendication 7, **caractérisé en ce qu'**on le met en oeuvre à l'avance à partir de la connaissance préalable de la manoeuvre à réaliser et on effectue la manoeuvre d'attitude du satellite en utilisant la trajectoire obtenue en boucle ouverte dans un contrôle d'attitude associant une commande en boucle ouverte à une commande en boucle fermée assurant la venue du satellite dans l'attitude finale désirée.

**13.** Dispositif de pilotage d'attitude d'un satellite, permettant de mettre en oeuvre le procédé selon l'une quelconque des revendications 1 à 12, comprenant :

- une grappe d'au moins quatre actionneurs gyroscopiques (10a, 10b, 10c, 10d) ayant des toupies (12) respectives montées sur des cardans (14) orientables autour d'axes parallèles à l'une ou l'autre de seulement deux directions différentes et fixes par rapport au satellite, formant ainsi deux groupes d'actionneurs (10a-10b, 10c-10d) dont l'un d'au moins deux actionneurs,
- des capteurs de mesure de l'attitude courante du satellite,
- des moyens de calcul (26, 34) pour calculer le besoin de couple de commande pour remplir une consigne d'attitude du satellite, et pour déterminer des moyens de commande des vitesses de précession des cardans réalisant le couple de commande au travers d'une méthode de linéarisation locale basée sur la pseudo-inverse de la matrice jacobienne de la fonction liant les orientations des cardans (14) des actionneurs (10a, 10b, 10c, 10d) au moment cinétique de la grappe.

**Claims**

1. A method of controlling the attitude of a satellite having a cluster of at least four gyroscopic actuators (10a, 10b, 10c, 10d) with respective spinners (12) mounted on gimbals (14) steerable about axes (18) parallel to one or the other of only two different directions that are fixed relative to the satellite, thus forming two groups of actuators of which one group has at least two actuators, the method comprising the steps of:

   · measuring the attitude of the satellite by means of sensors on board the satellite;
   · calculating the control torque required to perform an attitude-changing maneuver;
   · calculating local linearization based on pseudo-inversion of the Jacobean matrix of the function associating the orientations of the actuator gimbals (14) with the total angular momentum of the cluster in order to determine a new orientation for the gimbals; and
   · controlling precession speeds of at least one of the actuator gimbals (14) delivering the control torque for reaching the desired configuration;

   the method being **characterized by** the step of performing the calculation by applying a constraint of seeking a cluster configuration remote from singular configurations by sharing that component of the total angular momentum of the cluster which is perpendicular to both of said two directions between the two groups of actuators.

2. A method according to claim 1, **characterized by** the step of adopting, as a criterion for the remoteness of a configuration of the angles of the gimbals (14) in the cluster from a singular configuration, the product of two simpler criteria that apply separately to each of the two groups of actuators (10a, 10b, 10c, 10d).

3. A method according to claim 2, **characterized in that**, for a group constituted by two actuators each carrying a non-dimensional angular momentum of unity norm, the criterion for remoteness between a configuration of gimbal angles and a singular configuration is selected as:

   · being zero when the angle between the two angular momentum vectors carried by the two actuators is zero or flat; and
   · reaching a maximum when the angle between the two angular momentum vectors carried by the two actuators is close to 90°.

4. A method according to claim 3, **characterized in that** the criterion for remoteness of a configuration of gimbal angles from a singular configuration is determined by using one of the following parameters:

   · the norm of the vector product of two angular momentum vectors carried by the two actuators;
   · the absolute value of the sine of the angle formed between the two angular momentum vectors carried by the two actuators;
   · the area of a triangle having two sides constituted by the angular momentum vectors carried by the two actuators, their origins coinciding; and
   · the difference between unity and the absolute value of the scalar product of the two angular momentum vectors carried by the two actuators.

5. A method according to claim 2, **characterized in that** the group under consideration being constituted by three actuators each carrying a non-dimensional angular momentum of unity norm, the criterion for remoteness between a configuration of gimbal angles and a singular configuration is defined in such a manner as to cancel when one of the angles formed between any two of the three angular momentum vectors carried by the three actuators is zero and so as to reach its maximum when said angles are close to 120°.

6. A method according to claim 5, **characterized in that** the remoteness between a configuration of gimbal angles and a singular configuration is determined by using one of the following parameters:

   · the sum of the three vector products between pairs of the angular momentum vectors carried by the three actuators; and
   · the area of the triangle whose vertices coincide with the vertices of the angular momentum vectors carried by the three actuators, their origins coinciding.

7. A method according to any preceding claim for controlling the satellite in application of a relationship that is determined over time, the method being **characterized in that** a final configuration remote from singularities is sought continuously by permanently deflecting the cluster configuration so as to occupy the local maximum of the distance-from-singularity criterion.

8. A method according to any one of claims 1 to 6, **characterized in that** a final configuration remote from singularities is sought when it is detected that the remoteness between the current configuration and the associated singularity has dropped below a predetermined threshold.

9. A method according to any one of claims 1 to 6, **characterized in that** in order to perform a determined attitude maneuver reaching a final configuration that is remote from singularities, attitude is controlled by associating open loop control with closed loop control.

10. A method according to claim 9, **characterized in that** prior calculation is used to establish a correspondence table between the various cluster angular momentums needed for the various satellite maneuvers and respective associated optimum cluster configurations so as to reach a final configuration that is remote from singularities.

11. A method according to claim 9, **characterized in that** the search for a final configuration remote from singularities provides directly and in analytic manner an optimum cluster configuration delivering the requested cluster angular momentum needed for maneuvering the satellite.

12. A method according to claim 7, **characterized in that** it is implemented in advance on the basis of prior knowledge of the maneuver that is to be performed, and the satellite attitude maneuver is performed by using the resulting trajectory in an open loop in attitude control associating an open loop control with a closed loop control for bringing the satellite into the desired final attitude.

13. An apparatus for controlling the attitude of a satellite, enabling the method according to any one of claims 1 to 12 to be implemented, the apparatus comprising:

- a cluster of at least four gyroscopic actuators (10a, 10b, 10c, 10d) having respective spinners (12) mounted on gimbals (14) steerable about axes parallel to one or the other of only two different directions and fixed relative to the satellite, thus forming two groups of actuators (10a-10b, 10c-10d) of which one group has at least two clusters;
- sensors for measuring the current altitude of the satellite ,
- calculation means (26, 34) for calculating the control torque needed to comply with an attitude reference for the satellite, and for determining means for controlling the precession speeds of the gimbals to deliver the control torque by means of a local linearization method based on pseudo-insertion of the Jacobean matrix of the function associating the orientations of the actuator (10a, 10b, 10c, 10d) gimbals (14) with the angular momentum of the cluster.

**Patentansprüche**

1. Verfahren zur Steuerung der Fluglage eines Satelliten mit einem Aggregat aus mindestens vier gyroskopischen Betätigungsvorrichtungen (10a, 10b, 10c, 10d) mit Kreiseln (12), welche jeweils auf Kardanantrieben (14) angebracht sind, die um Achsen (18) gedreht werden können, welche zu der einen oder anderen von nur zwei unterschiedlichen Richtungen parallel und im Verhältnis zum Satelliten ortsfest sind, wodurch somit zwei Gruppen von Betätigungsvorrichtungen gebildet werden, von denen jeweils eine mindestens zwei Betätigungsvorrichtungen umfasst, in den Schritten

- Messen der Fluglage des Satelliten mit Hilfe von auf dem Satelliten angebrachten Messfühlern,
- Berechnen der benötigten Stellkraft, um ein Manöver zur Neuorientierung der Fluglage zu bewirken,
- Anstellen einer Berechnung zur lokalen Linearisierung auf Grundlage der Pseudo-Inversion der Jacobi-Matrix für die Funktion, welche die Ausrichtungen der Kardanantriebe (14) für die Betätigungsvorrichtungen mit dem Gesamtdrehimpuls des Aggregats verbindet, um eine neue Ausrichtung der Kardanantriebe zu bestimmen, und
- Regulieren der Präzessionsgeschwindigkeit von mindestens einem der Kardanantriebe (14) für die Betätigungsvorrichtungen, was für die die Stellkraft sorgt, um zu der angestrebten Konfiguration zu gelangen,
- **dadurch gekennzeichnet, dass** die Berechnung angestellt wird, indem bei der Ermittlung einer Aggregatkonfiguration eine Grenzwertbedingung eingesetzt wird, die von den singulären Konfigurationen entfernt ist, indem die Komponente des Gesamtdrehimpulses des Aggregats auf die beiden Gruppen von Betätigungsvorrichtungen verteilt wird, welche gleichzeitig senkrecht auf der einen und der anderen der beiden Richtungen steht.

2. Verfahren nach Anspruch 1, **dadurch gekennzeichnet, dass** als Kriterium für die Entfernung einer Winkelkonfiguration der Kardanantriebe (14) im Aggregat in Bezug auf eine singuläre Konfiguration das Produkt der beiden einfacheren Kriterien herangezogen wird, welche getrennt bei jeder der beiden Gruppen von Betätigungsvorrichtungen (10a - 10b, 10c-10d) zur Anwendung kommen.

3. Verfahren nach Anspruch 2, **dadurch gekennzeichnet, dass** für eine Gruppe, die sich aus zwei Betätigungsvorrichtungen zusammensetzt, von denen jede einen dimensionslosen Drehimpuls in Einheitsnorm aufweist, das Kriterium für die Entfernung zwischen einer Winkelkonfiguration der Kardanantriebe und einer singulären Konfiguration so ausgesucht wird, dass

- sie sich gegenseitig aufheben, wenn der Winkel zwischen den beiden Drehimpulsvektoren für die zwei Betätigungsvorrichtungen Null oder eben ist,
- sie ein Maximum erreichen, wenn der Winkel zwischen den beiden Drehimpulsvektoren für die zwei Betätigungsvorrichtungen nahe bei 90° liegt.

4. Verfahren nach Anspruch 3, **dadurch gekennzeichnet, dass** das Kriterium für die Entfernung einer Winkelkonfiguration der Kardanantriebe (14) in Bezug auf eine singuläre Konfiguration unter Verwendung der folgenden Parameter ermittelt wird:

- Norm des Vektorprodukts aus den zwei Drehimpulsvektoren für die beiden Betätigungsvorrichtungen,
- Absolutwert des Sinus des von den zwei Drehimpulsvektoren derbeiden Betätigungsvorrichtunge gebildeten Winkels,
- Fläche des Dreiecks, von dem zwei Seiten die Drehimpulsvektoren für die beiden Betätigungsvorrichtungen darstellen, wobei ihre Anfangspunkte zusammenfallen,
- Differenz zwischen der Einheit und dem Absolutwert des Skalarprodukts aus den zwei Drehimpulsvektoren für die beiden Betätigungsvorrichtungen,

5. Verfahren nach Anspruch 2, **dadurch gekennzeichnet, dass**, wenn die in Betracht gezogene Gruppe sich aus drei Betätigungsvorrichtungen zusammensetzt, von denen jedes einen dimensionslosen Drehimpuls in Einheitsnorm aufweist, das Kriterium für die Entfernung zwischen einer Winkelkonfiguration der Kardanantriebe und einer singulären Konfiguration so definiert ist, dass sie sich gegenseitig aufheben, wenn einer der Winkel, die jedes Mal von zwei der drei Drehimpulsvektoren der drei Betätigungsvorrichtungen gebildet werden, Null ist und so, dass ein Maximum erreicht wird, wenn die Winkel nahe bei 120° liegen.

6. Verfahren nach Anspruch 2, **dadurch gekennzeichnet, dass** die Entfernung zwischen einer Winkelkonfiguration der Kardanantriebe und einer singulären Konfiguration unter Verwendung eines der folgenden Parameter ermittelt wird:

- Summe der aus jeweils zwei Drehimpulsvektoren der drei Betätigungsvorrichtungen gebildeten drei Vektorprodukte,
- Fläche des Dreiecks, dessen Spitzen mit den Endpunkten der Drehimpulsvektoren der drei Betätigungsvorrichtungen zusammenfallen, wobei deren Anfangspunkte zusammenfallen.

7. Verfahren nach einem der vorhergehenden Ansprüche bei einer Lageregelung des Satelliten gemäß einem zeitabhängigen Gesetzt, **dadurch gekennzeichnet, dass** eine Endkonfiguration gesucht wird, die kontinuierlich von Singularitäten beabstandet ist, indem die Konfiguration des Aggregats dauernd verschoben wird, um das lokale Maximum des Kriteriums für den Abstand von der Singularität einzunehmen.

8. Verfahren nach einem der Ansprüche 1 bis 6, **dadurch gekennzeichnet, dass** eine Suche nach einer von Singularitäten beabstandeten Endkonfiguration durchgeführt wird, wenn ermittelt wird, dass die Entfernung zwischen der aktuellen Konfiguration und der assoziierten Singularität kleiner als ein vorbestimmter Schwellenwert wird.

9. Verfahren nach einem der Ansprüche 1 bis 6, **dadurch gekennzeichnet, dass** zur Durchführung eines bestimmten Fluglagemanövers zum Erreichen einer von Singularitäten entfernten Endkonfiguration die Fluglage kontrolliert wird, indem eine Steuerkette mit einer Regelung mit geschlossenem Ein- und Ausgang vereinigt wird.

**10.** Verfahren nach Anspruch 9, **dadurch gekennzeichnet, dass** mittels einer Vorausberechnung eine Tabellierung der Entsprechungen zwischen den unterschiedlichen für die verschiedenen Manöver des Satelliten benötigten Aggregat-Drehimpulse und den jeweiligen assoziierten optimalen Aggregat-Konfigurationen erstellt wird, um zu einer von den Singularitäten entfernten Endkonfiguration zu gelangen.

**11.** Verfahren nach Anspruch 9, **dadurch gekennzeichnet, dass** die Suche nach einer von den Singularitäten entfernten Endkonfiguration direkt und auf analytische Weise eine optimale Konfiguration für das Aggregat liefert, welche der Anforderung an den für das Manöver des Satelliten benötigten Aggregat-Drehimpulses nachkommt.

**12.** Verfahren nach Anspruch 7, **dadurch gekennzeichnet, dass** es ab dem vorherigen Wissen um das auszuführende Manöver im Voraus ausgeführt wird und das Fluglage-Manöver des Satelliten ausgeführt wird, indem die Trajektorie verwendet wird, die auf offenem Wirkungsweg bei einer Kontrolle der Fluglage erhalten wurde, indem eine Steuerkette mit einer Regelung mit geschlossenem Ein- und Ausgang kombiniert wurde, um sicher zu stellen, dass der Satellit in die endgültige gewünschte Fluglage zu liegen kommt.

**13.** Vorrichtung zur Steuerung der Fluglage eines Satelliten, mit welcher sich das Verfahren nach einem der Ansprüche 1 bis 12 durchführen lässt, mit:

- einem Aggregat aus mindestens vier gyroskopischen Betätigungsvorrichtungen (10a, 10b, 10c, 10d) mit Kreiseln (12), welche jeweils auf Kardanantrieben (14) angebracht sind, die um Achsen gedreht werden können, welche zu der einen oder anderen von nur zwei unterschiedlichen Richtungen parallel und im Verhältnis zum Satelliten ortsfest sind, wodurch somit zwei Gruppen von Betätigungs-vorrichtungen (10a-10b, 10c-10d) gebildet werden, von denen jeweils eine mindestens zwei Betätigungsvorrichtungen umfasst,
- Messfühlern für die aktuelle Fluglage des Satelliten, und
- Rechenmitteln (26, 34) zum Berechnen der benötigten Stellkraft, um einen Einstellwert für die Fluglage des Satelliten zu befolgen, und zur Regelung der Antriebsmittel für die Präzessionsgeschwindigkeit der Kardanantriebe, welche nach einem Verfahren zur örtlichen Linearisierung auf Grundlage der Pseudo-inversion der Jacobi-Matrix für die Funktion, welche die Ausrichtungen der Kardanantriebe (14) für die Betätigungs-vorrichtungen (10a, 10b, 10c, 10d) mit dem Drehimpuls des Aggregats verbindet, für die Stellkraft sorgen.

# FIG.1.

# FIG.2.

# FIG.3.